Europäisches Patentamt

European Patent Office

Office européen des brevets

(19)

(11) Publication number: **0 377 302
A2**

# EUROPEAN PATENT APPLICATION

(12)

(21) Application number: **89313359.5**

(51) Int. Cl.5: **C11D 3/12, C01B 33/34**

(22) Date of filing: **20.12.89**

| | |
|---|---|
| The title of the invention has been amended (Guidelines for Examination in the EPO, A-III, 7.3).<br><br>(30) Priority: **20.12.88 GB 8829710**<br><br>(43) Date of publication of application:<br>**11.07.90 Bulletin 90/28**<br><br>(84) Designated Contracting States:<br>**AT BE CH DE ES FR GB GR IT LI NL SE** | (71) Applicant: **UNILEVER PLC**<br>**Unilever House Blackfriars P.O. Box 68**<br>**London EC4P 4BQ(GB)**<br>(84) **GB**<br><br>Applicant: **UNILEVER NV**<br>**Burgemeester s'Jacobplein 1 P.O. Box 760**<br>**NL-3000 DK Rotterdam(NL)**<br>(84) **BE CH DE ES FR GR IT LI NL SE AT**<br><br>(72) Inventor: **Osinga, Theo Jan**<br>**Bemelerweg 50**<br>**NL-6267 AN Cadier en Keer(NL)**<br><br>(74) Representative: **Roscoe, Brian Corrie et al**<br>**UNILEVER PLC Patents Division P.O. Box 68**<br>**Unilever House**<br>**London EC4P 4BQ(GB)** |

(54) **Zeolite compositions.**

(57) Zeolite compositions having a bulk density of at least 500 gm/litre and a particle size substantially from 200 to 1000 microns comprise sodium alumina/silicate compacted in the substantial absence of fusible inorganic binding agents, preferably at a pressure from 500 to 3000 psi and optionally in the presence of additional detergent components for machine washing formulations.

EP 0 377 302 A2

EP 0 377 302 A2

## IMPROVED ZEOLITE COMPOSITIONS

This invention relates to improved aluminosilicate compositions and their preparation. The invention also relates to preparation of such improved aluminosilicate compositions and to machine washing detergent formulations containing such compositions.

The restrictions imposed for ecological reasons on detergent compositions containing phosphates has led to the introduction of alternative formulations containing zeolites. These comprise a group of aluminosilicates of the alkali metal and alkaline earth metals which contain very loosely held water. Zeolites are crystalline aluminosilicates but the invention may also be applied to amorphous aluminosilicates. Although available in granular form, zeolites presently obtainable exhibit relatively low bulk density of the order of 500 grams per litre, limiting the application of zeolites as components in concentrated fabric washing powders and rendering them unsuitable for detergent compositions intended for dishwashing, where again higher bulk densities are required to prevent separation from other components with which they are mixed in these compositions. The further problem presented by the use of zeolites is that high uptake rates must be preserved, representing rapid diffusion of water through the zeolite for effecting immediate ion exchange, together with the preservation of maximum calcium exchange capacity.

It has already been proposed to provide zeolites and other components of detergent formulations for fabric and dishwashing machines, for example phosphates and silicates, by granulation, either separately or together and to compact such mixtures under pressure between rollers. Under these conditions, hydrated metasilicates and polyphosphates fuse and even liquefy, with the effect not only to bind the materials together, but also to cause build up of material on the wall of the compaction equipment, due to the stickiness of the liquified material. Metasilicates are moreover highly corrosive and alkaline, creating dust corrosive to human tissue, the anhydrous form being particularly damaging and highly hygroscopic, causing burns. The pentahydrate form has poor stability and liquifies at even moderate temperatures.

It has also been proposed to compact zeolites at very high pressures for use in gas phase processes in which very high diffusion rates prevail in contrast to the much slower diffusion rates in the liquid phase in washing machines. Therefore a correspondingly more open structure is demanded for products to be used in the liquid phase to preserve reasonable diffusion rates.

The present invention provides compacted zeolite compositions suitable for use in machine washing formulations in concentrated form which are substantially free from added fusible components and which provide reasonably high water diffusion rates and Ca-uptake capacities combined with a bulk density of at least 500 grammes per litre and acceptable Ca-uptake rates and a process for producing such materials by compaction under moderate pressures in the absence of phosphates and metasilicates.

The zeolites to which the present invention relates are those having ion exchange properties which make them suitable as detergency builders. The preferred zeolite for this purpose is zeolite 4A but other crystalline aluminosilicates (zeolites) are usable.

## PRIOR ART

EP 253323 discloses granular detergents based on sodium metasilicate mixtures with sodium tripolyphosphate and/or zeolite optionally with other components, in which the powdered materials are compacted under pressure between the rollers, preferably at between 15 and 30 kN/cm roller lengths and in general, very high pressures are required to effect the necessary liquefaction of the fusible components in such compositions.

EP 0195307 similarly describes the compaction of sodium tripolyphosphate in the form of fine powder with the addition of water to effect its conversion to hexahydrate, either alone or in a mixture with other machine washing components in powder form. The pressures used are again of a high order.

USP 4288340 and DE 2856209 describe the preparation of granulated products, the latter including zeolites, by mixing intensively in a jet-spray mixer.

According to DE 2633598, a mixture of active alumina and zeolite is compacted under a pressure not less than one ton per cm roller width and the granulate formed is moistened to hydrate at least part of the components, when the granulate is heated and activated at high temperature to provide a catalyst support.

JP 52109498 describes compacting zeolite particles at 80 to 3,000 $Kg/cm^2$ in the presence of a binder for adsorption or ion exchange purposes.

According to JP 61069899 a spray-dried detergent composition comprising a surfactant and at least one builder is spray-dried and compacted, preferably using an extruder and disintegrating the extrudate

2

using high speed cutters, the composition including an alumino silicate source and a binder comprising sodium silicate or an organic agent.

JP 52109498 describes granulating zeolite particles in the absence of a binder, by compaction of either 80 to 3,000 Kg/cm$^2$ and fragmenting the solidified material.

USP 3875282 describes compacting spray-dried hydrous sodium silicate and breaking up or granulating the compacted product.

USP 3931036 describes preparation of alkali metasilicates into a thin sheet in a mixture with a small amount of dissolved silicate and granulating the thin sheet obtained after ageing.

## DESCRIPTION OF THE INVENTION

The present invention provides zeolites, preferably 4A having a bulk density of at least 500 grams per litre and more particularly, 500-1000 grams per litre, more especially from 800-1000 grams per litre at a particle size substantially within the range 200-1600 microns, preferably 400-1000 microns which comprise sodium aluminosilicate in granular form, optionally mixed with and particularly in the form of a co-granulate including sodium sulphate, sodium carbonate and/or sodium disilicate ($Na_2O$ $2SiO_2$), and compacted substantially free from fusible inorganic binding agents.

Additional components which may be present in the granulated zeolite products of the invention include organic binding agents to improve cohesion in the compacted granule e.g. starch, sodium carboxymethyl cellulose in amounts from 0.5 to 10% for example, by weight of the granulated product of the invention may be used and a small amount of up to approx 0.5% of polyvinyl alcohol and/or waterglass are also suitable binding agents. In the preparation of the granulated zeolites of the invention, sodium aluminosilicate obtained in a filtercake containing 30-70% of water may be blown with hot air or otherwise dried, to a water content of 3-30%. The dried filtercake is then compacted by mechanical means such as tableting presses, briquetting machines or by passing the cake between the nip of counter-rotating rolls. Moderate pressures are normally suitable and higher pressures should only be applied progressively. Preferably pressures of 500-2500 pounds psi are applied to form a thin compacted sheet, pressure within the range 900-1600 pounds psi being preferred. Pressures should be at least 500 psi and preferably not exceed 3000 psi. The temperature at which these pressures are applied are preferably from 5-50°C and the sheet obtained may be broken up by crushing in a suitable mill to form granules, which are passed through a set of sieves in order to select required particle size ranges(s). The over-sized particles can be returned to the mill and the finer particles recycled to the compaction step.

The novel detergent components of the present invention may be incorporated in detergent compositions of all physical types, for example, powders, liquids, gels and solid bars.

The detergent compositions of the invention will contain, as essential ingredients, one or more detergent-active compounds which may be chosen from soap and non-soap anionic, cationic, nonionic, amphoteric and zwitterionic detergent-active compounds, and mixtures thereof. Many suitable detergent-active compounds are available and are fully described in the literature, for example, in "Surface-Active Agents and Detergents", Volumes I and II, by Schwartz, Perry and Berch.

The preferred detergent-active compounds that can be used are soaps and synthetic non-soap anionic and nonionic compounds.

Anionic surfactants are well known to those skilled in the art. Examples include alkylbenzene sulphonates, particularly sodium linear alkylbenzene sulphonates having an alkyl chain length of $C_8$-$C_{15}$; primary and secondary alkyl sulphates, particularly sodium $C_{12}$-$C_{15}$ primary alcohol sulphates; alkyl ether sulphates; olefin sulphonates; alkane sulphonates; alkyl xylene sulphonates; dialkyl sulphosuccinates; and fatty acid ester sulphonates.

Nonionic surfactants that may be used include the primary and secondary alcohol ethoxylates, especially the $C_{12}$-$C_{15}$ primary and secondary alcohols ethoxylated with an average of from 3 to 20 moles of ethylene oxide per mole of alcohol; and alkylpolyglycosides.

The choice of surfactant, and the amount present, will depend on the intended use of the detergent composition. For example, for machine dishwashing a relatively low level of a low-foaming nonionic surfactant is generally preferred. In fabric washing compositions, different surfactant systems may be chosen, as is well known by the skilled detergent formulator, for handwashing products and for machine washing products.

The total amount of surfactant present will of course depend on the intended end use and may be as low as 0.5% by weight, for example in a machine dishwashing composition, or as high as 60% by weight, for example in a composition for washing fabrics by hand. For fabric washing compositions in general, an amount of from 5 to 40% by weight is generally appropriate.

Detergent compositions suitable for use in most automatic fabric washing machines generally contain anionic non-soap surfactant, or nonionic surfactant, or combinations of the two in any ratio, optionally together with soap.

The detergent compositions of the invention will generally also contain one or more detergency builders. The total amount of detergency builder in the compositions will suitably range from 15 to 80 wt%

Additional inorganic builders that may be present include sodium carbonate, if desired in combination with a crystallisation seed for calcium carbonate, as disclosed in GB 1 437 950 (Unilever); amorphous aluminosilicates as disclosed in GB 1 473 201 (Henkel), amorphous aluminosilicates as disclosed in GB 1 473 202 (Henkel) and mixed crystalline/amorphous aluminosilicates as disclosed in GB 1 470 250 (Henkel); and layered silicates as disclosed in Ep 164 514B (Hoechst). Inorganic phosphate builders, for example, sodium orthophosphate, pyrophosphate and tripolyphosphate, may also be present, but on environmental grounds these are no longer preferred. The zeolites described in the above literature are also usable as feedstock in the present invention.

Organic builders that may be present include polycarboxylate polymers such as polyacrylates, acrylic/maleic copolymers, and acrylic phosphinates; monomeric polycarboxylates such as citrates, gluconates, oxydisuccinates, tartrate monosuccinates and disuccinates, glycerol mono-, di- and trisuccinates, carboxymethyloxysuccinates, carboxymethyloxymalonates, dipicolinates, hydroxyethyliminodiacetates, nitrilotriacetates, ethylenediaminetetraacetates, alkyl- and alkenyl malonates and succinates, and sulphonated fatty acid salts. This list is not intended to be exhaustive.

Detergent compositions according to the invention may also suitably contain a bleach system. Machine dishwashing compositions may suitably contain a chlorine bleach, while fabric washing compositions may contain peroxy bleach compounds, for example, inorganic persalts or organic peroxyacids, which may be employed in conjunction with activators to improve bleaching action at low wash temperatures.

Preferred inorganic persalts for inclusion in fabric washing compositions are sodium perborate monohydrate and tetrahydrate, and sodium percarbonate, advantageously employed together with an activator. Bleach activators, also referred to as bleach precursors, have been widely disclosed in the art. Preferred examples include peracetic acid precursors, for example, tetraacetylethylene diamine, now in widespread commercial use in conjunction with sodium perborate; and perbenzoic acid precursors. The novel quaternary ammonium and phosphonium bleach activators disclosed in US 4 751 015 and US 4 818 426 (Lever Brothers Company) are also of great interest.

The skilled detergent worker will have no difficulty in applying the normal principles to choose a suitable bleach system.

Other materials that may be present in detergent compositions of the invention include sodium silicate, fluorescers, antiredeposition agents, inorganic salts such as sodium sulphate, enzymes, lather control agents or lather boosters as appropriate, pigments, and perfumes. This list is not intended to be exhaustive.

Detergent compositions of the invention may be prepared by any suitable method. Particulate detergent compositions are suitably prepared by spray-drying a slurry of compatible heat-insensitive components, and then spraying on or postdosing those ingredients unsuitable for processing via the slurry. The skilled detergent formulator will have no difficulty in deciding which components should be included in the slurry and which should be postdosed or sprayed on.

Particulate detergent compositions of the invention preferably have a bulk density of at least 400 g/l, more preferably at least 500 g/l.

Concentrated fabric washing and machine dish washing powder formulations may then be made up consisting of 10-40% of zeolite granules, 0-60% alkali metal silicate, 0.5-25% suitable surfactant(s), liquid surfactants being sprayed on the solid components with thorough mixing, 0-30% sodium carbonate 0-30% sodium sulphate, optical whiteners, 0-25% sodiumperborate, 0-10% bleach activators for low temperature bleaching eg. TAED and also other components as used by skilled detergent formulators eg. enzyme, fabric softeners etc.

The granular zeolite will in general be introduced in the formulation by a dry mixing process.

For a fabric washing powder it can also be post-dosed to a mixture of spray-dried components.

The surfactants can be of the anionic-, cationic- or the nonionic type or mixtures thereof.

Preferably the compositions of the invention exhibit a calcium exchange capacity of from 100 to 170 mg. CaO/g., and an uptake rate of from 500 to 800 after 1 minute and from 200 to 900 after 5 minutes as hereinafter defined.

## EXAMPLES

The following examples of the invention were carried out using a commercially available zeolite 4A powder suitable for detergent applications, with a bulk density (B.D.) 293 g/l; dry solid content 78.52%; Ca uptake capacity 173 mg CaO/g dry solid. The zeolite was compacted between twin rollers 5 cm in length at various pressures and ambient temperature (12-20°C).

The compressed zeolite leaving the rollers in the form of a thin sheet was cooled, milled and sieved to a predetermined average particle size range of approximately 200-1000 microns. Results appear in Table 1.

In further examples shown in Tables 2 and 3 sodium silicate solution was spread on a zeolite before compaction. Spray-dried sodium disilicate, sodium carbonate and sodium sulphate were also included in additional examples as solid powders, thoroughly mixed with the zeolite powder before compaction. The sodium disilicate was of particle size approximately 75% between 0.063 and 0.250 mm, 98% below 0.25 mm; $Na_2O$ content approximately 25%; $SiO_2$ content of approximately 50%; $H_2O$ content approximately 21%.

The product of each example was examined after milling and sieving, for dry solid content and bulk density, together with calcium exchange capacity, expressed as mg calcium oxide/g., and uptake rate showing the Ca concentration after 1, 2 and 5 minutes as expressed as: micromol./litre at an initial concentration of 1,000 micro mol./litre.

The Ca-uptake rate was measured using a calcium-selective electrode to measure the calcium ion concentration in 1 litre of stirred distilled water containing 1 millimole Ca ions and 0.2 millimole Mg ions. 1 gram zeolite was added and the Ca- concentration is measured as a function of time over 5 minutes.

The Ca exchange capacity measurement was obtained by adding 1g zeolite to 1 litre of an aqueous solution of calcium chloride at a concentration of 5 millimole/litre. After stirring for 30 minutes at 20°C, the zeolite was filtered off and the excess calcium remaining in the filtrate was measured. The amount of calcium picked up by the zeolite and calculated by difference is expressed as mg. CaO/g. zeolite.

Further particulars appear in the accompanying Tables.

TABLE 1

| Compacted Zeolite | | | | Uptake Rate | | |
|---|---|---|---|---|---|---|
| Sample Pressure | Dry Solid Cont(%) | B.D. g/l | Ca Exchange Cap | | | |
| | | | mgCaO/g | 1 min | 2 min | 5 min |
| 0 | 78.5 | 293 | 173 | 1 | <1 | <1 |
| 25 bar | to | 504 | 153 | 520 | 420 | 230 |
| 50 bar | 78.7 | 606 | 151 | 670 | 580 | 440 |
| 75 bar | | 599 | 138 | 700 | 620 | 470 |
| 100 bar | | 629 | 149 | 760 | 680 | 510 |
| 115 bar | | 623 | 154 | 730 | 640 | 470 |
| 125 bar | | 649 | 109 | 600 | 570 | 520 |

The last sample was again milled to the original particle size of the powder with following results.

| 125 bar milled | 79.2 | 176 | <1 | <1 | <1 |
|---|---|---|---|---|---|

From these results it can be concluded that compaction pressures up to 115 bar do not substantially influence the calcium exchange capacity of the product, but that above 115 bar it falls. As is to be expected, the granulated material has a lower calcium uptake rate than the original powder. However, the rate is still acceptable since approximately 50% of the calcium is picked up within 5 minutes.

The data in this Table also demonstrates that the uptake rate is not substantially influenced by the pressure above 50 bar. At 25 bar, a higher rate is observed reaching 77% calcium uptake after 5 minutes.

The test on the re-milled product shows that the original properties of the zeolite powder are completely restored.

TABLE 2

| Influence of addition of liquid Na-silicate (WG) and culminal | | | | | | |
|---|---|---|---|---|---|---|
| (culm.) | | | | | | |
| Sample Pressure | Dry Solid Cont(%) | B.D. g/l | Ca Exchange Cap | Uptake Rate | | |
| | | | mgCaO/g | 1 min | 2 min | 5 min |
| 0 | 78.5 | 293 | 173 | 1 | <1 | <1 |
| 125 bar | 78.7 | 649 | 109 | 600 | 570 | 520 |
| 1% culm | 78.7 | 649 | 126 | 680 | 660 | 650 |
| 2.5% culm | 78.4 | 625 | 129 | 650 | 600 | 530 |
| 100 bar | 78.7 | 629 | 149 | 760 | 680 | 510 |
| 1%Wt WG | 78.6 | 625 | 140 | 790 | 720 | 650 |
| 2.5% WG | 78.5 | 650 | 108 | 990 | 980 | 890 |

From the above data only moderate changes in properties were effected by the addition of the culminal but the higher amount of liquid sodium silicate has a strong negative effect on the uptake rate.

TABLE 3

| Influence of addition of Na-disilicate powder (A2), $Na_2CO_3$ (soda) and $Na_2SO_4$ powders | | | | | | |
|---|---|---|---|---|---|---|
| Sample Pressure | Dry Solid Cont(%) | B.D. g/l | Ca Exchange Cap | Uptake Rate (Ca) | | |
| | | | mgCaO/g | 1 min | 2 min | 5 min |
| 75 bar | 78.6 | 599 | 138 | 700 | 620 | 470 (Rpt) |
| 75 bar | 77.9 | 659 | 164 | 660 | 530 | 340 |
| 100 bar | 78.7 | 629 | 149 | 760 | 680 | 510 (Rpt) |
| 5% A2 | 78.3 | 621 | 130 | 800 | 700 | 470 |
| 20% A2 | 78.0 | 672 | 156 | 390 | 320 | 210 |
| 50% A2 | 78.6 | 780 | | 110 | 31 | 46 |
| 110 bar 20% soda | 74.0 | 676 | | 130 | 110 | 40 |
| 100 bar 50%$Na_2SO_4$ | 89.0 | 852 | 116 | 490 | 430 | 310 |

The increase in bulk density with high amounts of these additives is evident; at the same pressures the exchange capacity is not in any case consistently effected nor markedly changed by the lesser amounts of these additives but a marked improvement in uptake rate takes place with both at the higher amounts, particuarly with sodium disilicate.

6

TABLE 4

| Influence of quantity of zeolite on uptake rate | | | | | | |
|---|---|---|---|---|---|---|
| In the test reported in this Table, the above test of calcium uptake rate was compared by increasing the amount of zeolite compacted at 50 bar, to 1.5 g/litre. | | | | | | |
| Sample Pressure (Input) | Dry Solid Cont(%) | B.D. g/l | Ca Exchange Cap. | Uptake Rate (Ca) expressed as residual | | |
| Ca conc. in Micromol./1 | | | | Init. conc.1000 micromol./1 after | | |
| | | | | 1 min | 2 min. | 5 min. |
| 50 bar (1 g/l.) | 78.6 | 606 | 151 | 670 | 580 | 440 |
| 50 bar (1.5 g/l.) | | | | 340 | 210 | 84 |

Table 4 shows that at a 50% higher input level the rate is increased to such an extent that more than 91% of the calcium is picked up in 5 minutes.

The zeolite products of the present invention may be used in a variety of applications in addition to machine washing formulations, for example for water softening, as catalysts or catalyst supports, as selective adsorbents for gas purification and separation eg. for separating straight chain and branch chain organic compounds or for selectively adsorbing gases in the treatment of eg. air to separate oxygen from nitrogen, natural gas for separating branched from straight chain hydrocarbons or for refining gases prior to cryogenic separation and cracked gas prior to olefin separation. They may also be used for separation in liquid phase eg. for the treatment of effluents, sewage, water softening and removal of heavy metal ions from process solutions. The products are also useful for use as dessiccants in eg. sealed glass windows and doors, in packaging and other static systems and as additives for fertilisers, binding liquid compounds for slow release of plant nutrients, fungicides and pesticide carriers and as carriers for gas and chemicals in adsorbed condition for storage and for storage of solar energy via an adsorption/desorption cycle, or in cat litters.

The higher bulk density of the zeolite products of the invention permits more zeolite to be packed in fixed beds in reactors and is easier to handle than powdered zeolite. Easier separation from liquids is possible by decanting or settling and less entrainment takes place in gas or liquid streams in which the material is used.

The zeolite products of the invention may be used in granular form in dried detergent formulations and for effluent treatment, or in the form of granules or beads for fixed bed reactors, or in sheets or granular form in building materials, in addition to the above applications.

Zeolites are in general aluminosilicates having regular cavities wherein cations are present to compensate for the fact that A1 is 3-valent, replacing a Si atom in a $SiO_2$ array thus leading to one negative charge per A1 atom. The counter cation neutralizes this charge.

These cations can be exchanged thus influencing both the effective pore sizes of the zeolite and the polarity and acidity. Cations commonly used are H, Na, K, Ca and Mg.

The choice of the counter cation can have a major impact onthe performance in catalysis and on adsorption/separation properties.


## Claims

1. A zeolite or amorphous aluminosilicate composition having a bulk density of at least 500 gm per litre and a particle size substantially from 200 to 1600 microns which comprises sodium aluminosilicate compacted in the substantial absence of fusible inorganic binding agents.

2. A composition according to claim 1 having a bulk density of up to 1000 gms per litre.

3. A composition according to claim 1 or 2 having a particle size of 400 to 1,000 microns.

4. A composition according to any of the preceding claims comprising a co-granulate including 1 or more of sodium sulphate, sodium carbonate and sodium disilicate.

5. A composition according to any of the preceding claims which includes from 0.5 to 10% of an organic binding agent.

6. A composition according to any of the preceding claims which includes up to 0.5% of waterglass.

7. A composition according to any of the preceding claims having a calcium exchange capacity from 100 to 170 mg. CaO/g.

8. A composition according to any of the preceding claims having an uptake rate as hereinbefore defined from 500 to 800 after 1 minute and from 200 to 900 after 5 minutes.

9. Process for the preparation of a composition as claimed in claim 1 comprising compacting sodium aluminosilicate by mechanical means at a pressure from 500 to 3,000 psi optionally in the presence of additional detergent components and in the substantial absence of fusible inorganic binding agents and breaking up the sheet obtained by crushing to form granules having a particle size substantially within the range 200 to 1600 microns.

10. A detergent formulation containing a compacted zeolite or amorphous aluminosilicate compositon according to any preceding claim in an amount from about 10% to about 40% by weight of the formulation.